# EUROPEAN PATENT APPLICATION

(11) **EP 4 207 378 A1**
(43) Date of publication of application: **05.07.2023**
(21) Application number: 21860841.2
(22) Date of filing: 29.03.2021
(51) Int. Cl.: H01M 4/485, H01M 4/525, H01M 10/052, H01M 50/409

(54) **LITHIUM ION SECONDARY BATTERY**

(30) Priority: 26.08.2020 JP 2020142882
(71) Applicant: NGK Insulators, Ltd., Nagoya-shi, Aichi 467-8530 (JP)
(72) Inventor: YURA, Yukinobu, Nagoya-Shi, Aichi 4678530 (JP); OISHI, Kengo, Nagoya-Shi, Aichi 4678530 (JP); MIZUKAMI, Shunsuke, Nagoya-Shi, Aichi 4678530 (JP)
(74) Representative: Müller-Boré & Partner Patentanwälte PartG mbB
(86) International application number: PCT/JP2021/013289
(87) International publication number: WO 2022/044409

(57) **Abstract**

Provided is a lithium ion secondary battery of integrated sintered body type capable of improving the yield and the long-term performance. The lithium ion secondary battery includes (a) a unit cell including a positive electrode layer composed of a lithium complex oxide sintered body, a negative electrode layer composed of a titanium-containing sintered body, a ceramic separator interposed between the positive electrode layer and the negative electrode layer, and an electrolyte with which at least the ceramic separator is impregnated, (b) a current collecting layer provided on each of both sides or the surface on the negative electrode layer side of the unit cell, and (c) an exterior body including a closed space, the closed space accommodating the unit cell. The positive electrode layer, the ceramic separator, the negative electrode layer, and the current collecting layer form one integrated sintered body as a whole, whereby the positive electrode layer, the ceramic separator, the negative electrode layer, and the current collecting layer are bonded together, and in cross-sectional observation of the interface between the current collecting layer and the negative electrode layer, the proportion of the region in which the current collecting layer and the negative electrode layer are in direct contact at the interface is 45 to 90%.

## Description

### TECHNICAL FIELD

The present invention relates to a lithium ion secondary battery.

### BACKGROUND ART

Lithium ion secondary batteries are widely used in various devices that require charging. In many existing lithium ion secondary batteries, a powder-dispersed positive electrode (so-called coated electrode) produced by applying a positive electrode mixture containing a positive electrode active material, a conductive agent, a binder, and the like, followed by drying, is employed.

Such powder-dispersed positive electrodes generally contain a relatively large amount (e.g., about 10% by weight) of components (binders and conductive agents) that do not contribute to the capacity of battery, resulting in a low packing density of the positive electrode active material, i.e., lithium complex oxide. Accordingly, the powder-dispersed positive electrode should be greatly improved from the viewpoint of the capacity and charge/discharge efficiency. Some attempts have been made to improve the capacity and charge/discharge efficiency by positive electrodes or layers of positive electrode active material composed of lithium complex oxide sintered plate. In this case, since the positive electrode or the layer of positive electrode active material contains no binder or conductive agent (e.g., conductive carbon), high capacity and satisfactory charge/discharge efficiency can be expected due to a high packing density of lithium complex oxide. For example, Patent Literature 1 (JP5587052B) discloses a positive electrode of a lithium ion secondary battery including a positive electrode current collector and a positive electrode active material layer connected to the positive electrode current collector with a conductive bonding layer therebetween. This positive electrode active material layer is composed of a lithium complex oxide sintered plate having a thickness of 30 µm or more, a porosity of 3 to 30%, and an open pore ratio of 70% or more. Further, Patent Literature 2 (JP6374634B) discloses a lithium complex oxide sintered plate used for positive electrodes of lithium ion secondary batteries, such as lithium cobaltate LiCoO₂ (which will be hereinafter referred to as LCO). This lithium complex oxide sintered plate has a structure in which a plurality of primary grains having a layered rock salt structure are bound to each other and has a porosity of 3 to 40%, an average pore diameter of 15 µm or less, an open pore ratio of 70% or more, a thickness of 15 to 200 µm, and a primary grain size, which is the average grain size of a plurality of primary grains, of 20 µm or less. Further, this lithium complex oxide sintered plate has an average angle formed by (003) of the plurality of primary grains plane to the plate face of the lithium complex oxide sintered plate, that is, an average tilt angle of over 0° and 30° or less.

Meanwhile, use of a titanium contain sintered plate as a negative electrode is also proposed. For example, Patent Literature 3 (JP2015-185337A) discloses a lithium ion secondary battery using a lithium titanate (Li₄Ti₅O₁₂) sintered body as a positive electrode or a negative electrode. Patent Literature 4 (JP6392493B) discloses a lithium titanate Li₄Ti₅O₁₂ (which will be hereinafter referred to as LTO) sintered plate used for negative electrodes of lithium ion secondary batteries. This LTO sintered plate has a structure in which a plurality of primary grains are bound to each other and has a thickness of 10 to 290 µm, a primary grain size, which is the average grain size of a plurality of primary grains, of 1.2 µm or less, a porosity of 21 to 45%, and an open pore ratio of 60% or more.

A lithium ion secondary battery with high discharge capacity and excellent charge/discharge cycle performance can be provided by employing a configuration in which a positive electrode layer, a separator, and a negative electrode layer form one integrated sintered plate as a whole is also proposed. For example, Patent Literature 5 (WO2019/221140) discloses a lithium ion secondary battery comprising a positive electrode layer composed of a sintered body of a lithium complex oxide (e.g., lithium cobaltate), a negative electrode layer composed of a titanium-containing sintered body (e.g., lithium titanate), a ceramic separator, and an electrolyte with which the ceramic separator is impregnated. In this battery, the positive electrode layer, the ceramic separator, and the negative electrode layer form one integrated sintered plate as a whole, whereby the positive electrode layer, the ceramic separator, and the negative electrode layer are bonded together.

### CITATION LIST

### PATENT LITERATURE

Patent Literature 1: JP5587052B
Patent Literature 2: JP6374634B
Patent Literature 3: JP2015-185337A
Patent Literature 4: JP6392493B
Patent Literature 5: WO2019/221140A1

### SUMMARY OF INVENTION

However, when attempts are made to produce such a lithium ion secondary battery of integrated sintered body type as disclosed in Patent Literature 5 (WO2019/221140A1), there has been a problem that the yield and the long-term performance are poor.

The inventors have now found that, in a lithium ion secondary battery of integrated sintered body type in which a positive electrode layer, a ceramic separator, and a negative electrode layer form one integrated sintered body as a whole, the yield and the long-term performance can be improved by allowing the integrated sintered body to include a current collecting layer, and setting the proportion of the region in which the current collecting layer and the negative electrode layer are in direct contact at the bonding interface to a predetermined range.

Accordingly, an object of the present invention is to provide a lithium ion secondary battery of integrated sintered body type capable of improving the yield and the long-term performance.

According to an aspect of the present invention, there is provided a lithium ion secondary battery comprising:
(a) a unit cell comprising:
   a positive electrode layer composed of a lithium complex oxide sintered body,
   a negative electrode layer composed of a titanium-containing sintered body,
   a ceramic separator interposed between the positive electrode layer and the negative electrode layer, and
   an electrolyte with which at least the ceramic separator is impregnated;
(b) a current collecting layer provided on each of both sides or a surface on a negative electrode layer side of the unit cell; and
(c) an exterior body comprising a closed space, the closed space accommodating the unit cell,

wherein the positive electrode layer, the ceramic separator, the negative electrode layer, and the current collecting layer form one integrated sintered body as a whole, whereby the positive electrode layer, the ceramic separator, the negative electrode layer, and the current collecting layer are bonded together, and
in cross-sectional observation of an interface between the current collecting layer and the negative electrode layer, a proportion of a region in which the current collecting layer and the negative electrode layer are in direct contact at the interface is 45 to 90%.

### BRIEF DESCRIPTION OF DRAWINGS

Figure 1 is a schematic sectional view of an example of the lithium ion secondary battery of the present invention.
Figure 2 is a SEM image showing an example of a cross section perpendicular to the layer face of an oriented positive electrode layer.
Figure 3 is an EBSD image in the cross section of the oriented positive electrode layer shown in Figure 2.
Figure 4 is an area-based histogram showing the distribution of orientation angles of primary grains in the EBSD image shown in Figure 3.
Figure 5 is a schematic sectional view conceptually showing an example of a layer structure of stack cells that can be employed in the lithium ion secondary battery of the present invention.
Figure 6 is a schematic sectional view conceptually showing another example of a layer structure of stack cells that can be employed in the lithium ion secondary battery of the present invention.
Figure 7 is a schematic sectional view conceptually showing another example of a layer structure of stack cells that can be employed in the lithium ion secondary battery of the present invention.
Figure 8 is a schematic sectional view conceptually showing another example of a layer structure of stack cells that can be employed in the lithium ion secondary battery of the present invention.

### DESCRIPTION OF EMBODIMENTS

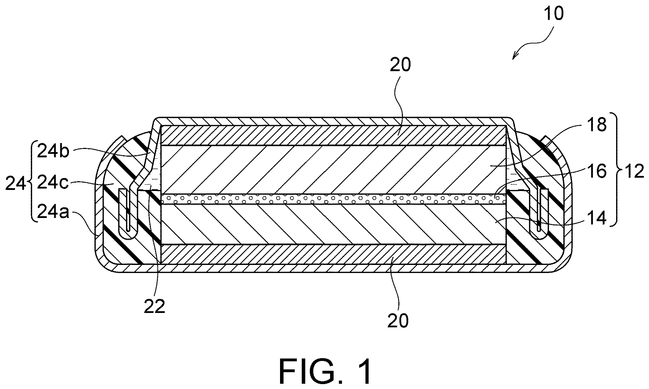

Figure 1 schematically shows an example of the lithium ion secondary battery of the present invention. The lithium ion secondary battery 10 shown in Figure 1 is in the form of a coin-shaped battery, but the present invention is not limited to this example and may be in the form of another battery. The lithium ion secondary battery 10 comprises unit cells 12, a current collecting layer 20 provided on each of both sides or the surface on the negative electrode layer 18 side of the unit cells 12, and an exterior body 24. The exterior body 24 comprises a closed space, and the closed space accommodates the unit cells 12. Each of the unit cells 12 comprises a positive electrode layer 14 composed of a lithium complex oxide sintered body, a ceramic separator 16, a negative electrode layer 18 composed of a titanium-containing sintered body, and an electrolytic solution 22. The ceramic separator 16 is interposed between the positive electrode layer 14 and the negative electrode layer 18. At least the ceramic separator is impregnated with the electrolytic solution 22, typically, the positive electrode layer 14 and/or the negative electrode layer 18 are also impregnated therewith. The positive electrode layer 14, the ceramic separator 16, the negative electrode layer 18, and the current collecting layer 20 form one integrated sintered body as a whole, whereby the positive electrode layer 14, the ceramic separator 16, the negative electrode layer 18, and the current collecting layer 20 are bonded together. Then, in cross-sectional observation of the interface between the current collecting layer 20 and the negative electrode layer 18, the proportion of the region in which the current collecting layer 20 and the negative electrode layer 18 are in direct contact at the interface is 45 to 90%. In this way, in a lithium ion secondary battery of integrated sintered body type, the yield and the long-term performance (e.g., discharge capacity retention rate) can be improved by allowing the integrated sintered body to include the current collecting layer 20 and setting the proportion of the region in which the current collecting layer 20 and the negative electrode layer 18 are in direct contact at the bonding interface to the aforementioned range.

As mentioned above, when attempts to produce the lithium ion secondary batteries of integrated sintered body type according to the conventional art are made, there has been a problem that the yield and the long-term performance are poor. The present invention conveniently overcomes such a problem. That is, one of the main causes for the decrease in yield is the interfacial delamination (particularly, for example, delamination at the interface between the positive electrode layer and the ceramic separator, delamination at the interface between the negative electrode layer and the ceramic separator, delamination at the interface between the positive electrode layer and the current collecting layer, and delamination at the interface between the negative electrode layer and the current collecting layer). In particular, delamination is likely to occur at the interface between the negative electrode layer and the current collecting layer. This is probably because the electrode layer of sintered body type inevitably has pores (due to the structure in which a number of primary grains are necked), so that there are a number of voids between each electrode layer (particularly, the negative electrode layer) and other layers. In contrast, the positive electrode layer 14, the ceramic separator 16, the negative electrode layer 18, and the current collecting layer 20 form one integrated sintered body as a whole in the lithium ion secondary battery of the present invention 10, as a result of which the positive electrode layer 14, the ceramic separator 16, the negative electrode layer 18, and the current collecting layer 20 are sufficiently bonded together. Moreover, setting the proportion of the region in which the current collecting layer 20 and the negative electrode layer 18 are in direct contact at the bonding interface to the range of 45 to 90% allows an effect of preventing delamination to be obtained due to the sufficient contact between the negative electrode layer 18 and the current collecting layer 20, and an adverse effect (the deterioration in long-term performance) due to the direct contact area between the negative electrode layer 18 and the current collecting layer 20 being excessively large to be avoided. The reason why the long-term performance (e.g., discharge capacity retention rate) deteriorates when the direct contact area between the negative electrode layer 18 and the current collecting layer 20 is excessively large is not clear, but it is probably because stress during charging and discharging tends to occur at the interface between the negative electrode layer 18 and the current collecting layer 20, and the interfacial delamination tends to occur.

In cross-sectional observation of the interface between the current collecting layer 20 and the negative electrode layer 18, the proportion of the region in which the current collecting layer 20 and the negative electrode layer 18 are in direct contact at the interface is 45 to 90%, preferably 45 to 85%, more preferably 47 to 80%, further preferably 50 to 75%, particularly preferably 55 to 70%. The proportion of the aforementioned direct contact region can be determined by subjecting a cross section including the current collecting layer 20 and the negative electrode layer 18 obtained by polishing with a cross-section polisher (CP) (a cross section perpendicular to the plate face of each electrode plate) to observation with a scanning electron microscope (SEM) at 1000-fold field of view (125 µm × 125 µm) and measurement by the energy dispersive X-ray spectroscopy (EDX) by the following procedure. First, the regions of the current collecting layer (specified from the constituent elements of the current collecting layer such as Au), the negative electrode layer (specified from the constituent elements of the negative electrode layer such as Ti), and voids are defined based on the SEM image obtained and the EDX elemental mapping image. Then, the length L₁ (which will be hereinafter referred to as current collecting layer interfacial length L₁) of the line segment of the current collecting layer constituting the interface and the total length L₂ (which will be hereinafter referred to as the direct contact length L₂) of the line segments at the interface where the current collecting layer and the negative electrode layer are in direct contact are determined. The direct contact length L₂ is the total length of the individual direct contact line segments (e.g., L₂₁ + L₂₂ + ... + L₂ₙ (n is an integer)) and equal to the value obtained by subtracting the total length L₃ of the line segments at the interface where the current collecting layer and voids are in contact from the current collecting layer interfacial length L₁. Then, the direct contact length L₂ is divided by the current collecting layer interfacial length L₁ and multiplied by 100, to calculate the proportion of the direct contact region (= 100 × L₂/L₁). This measurement is performed at three points in the negative electrode layer, and the average of those values is employed as the proportion of the direct contact region at the interface between the current collecting layer and the negative electrode layer.

The positive electrode layer 14 is composed of a lithium complex oxide sintered body. The fact that the positive electrode layer 14 is composed of a sintered body means that the positive electrode layer 14 contains no binder or conductive agent. This is because, even if a binder is contained in a green sheet, the binder disappears or burns out during firing. Since the positive electrode layer 14 contains no binder, there is an advantage that deterioration of the positive electrode due to the electrolytic solution 22 can be avoided. The lithium complex oxide constituting the sintered body is particularly preferably lithium cobaltate (typically, LiCoO₂, which may be hereinafter abbreviated as LCO). Various lithium complex oxide sintered plates or LCO sintered plates are known, and those disclosed in Patent Literature 1 (JP5587052B) and Patent Literature 2 (JP6374634B) can be referred to, for example.

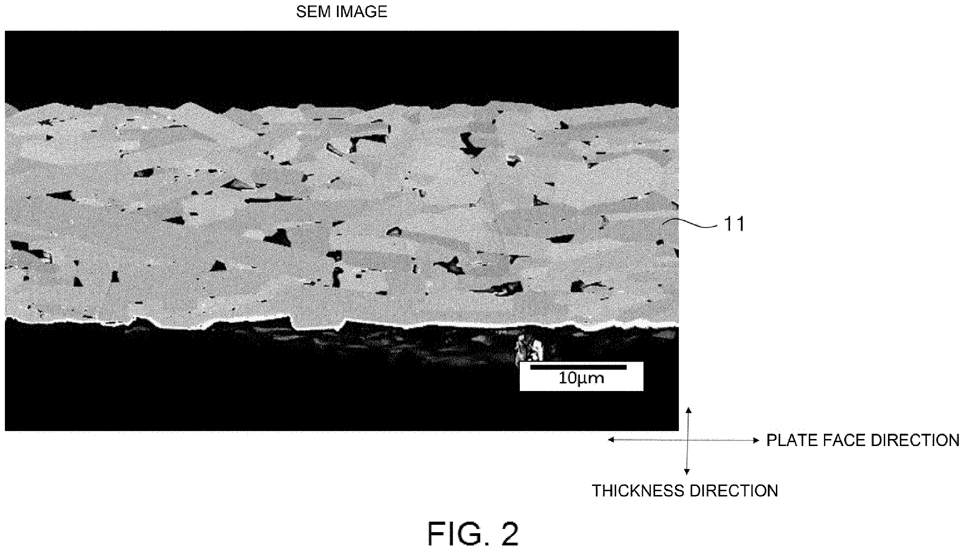

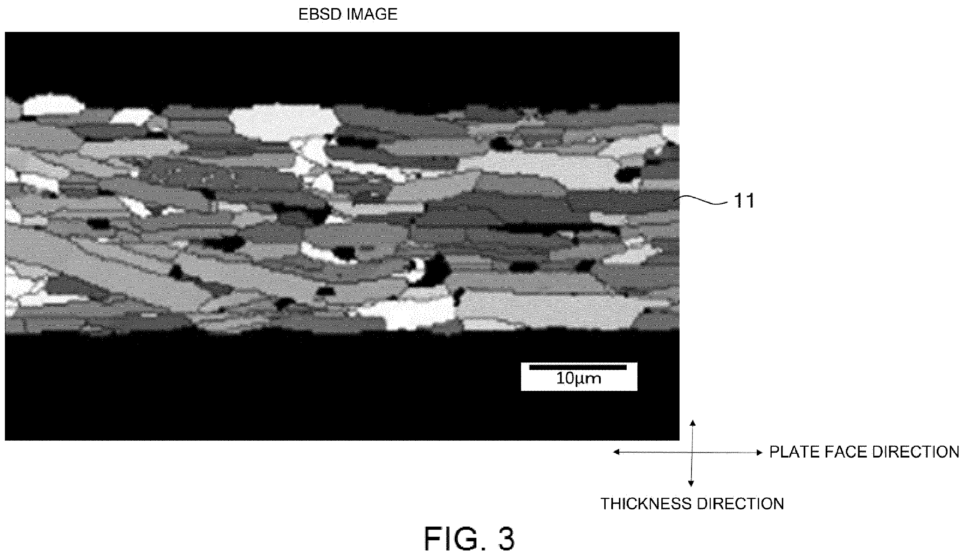

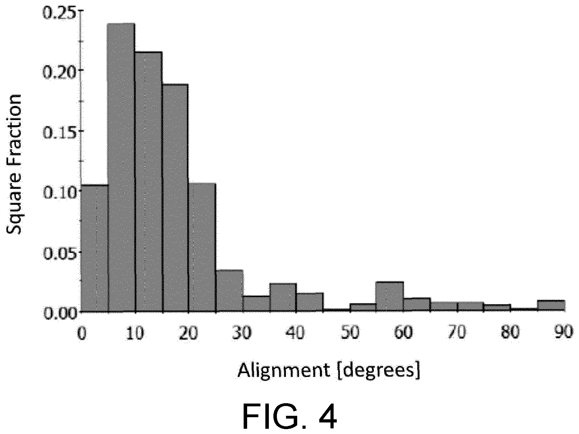

According to a preferable aspect of the present invention, the positive electrode layer 14, that is, the lithium complex oxide sintered plate is an oriented positive electrode layer including a plurality of primary grains composed of lithium complex oxide, the plurality of primary grains being oriented at an average orientation angle of over 0° and 30° or less to the layer face of the positive electrode layer. Figure 2 shows an example of a SEM image in a cross section perpendicular to the layer face of the oriented positive electrode layer 14, and Figure 3 shows an electron backscatter diffraction (EBSD: Electron Backscatter Diffraction) image in a cross section perpendicular to the layer face of the oriented positive electrode layer 14. Further, Figure 4 shows an area-based histogram showing the distribution of orientation angles of primary grains 11 in the EBSD image shown in Figure 3. In the EBSD image shown in Figure 3, the discontinuity of crystal orientation can be observed. In Figure 3, the orientation angle of each primary grain 11 is indicated by the shading of color. A darker color indicates a smaller orientation angle. The orientation angle is a tilt angle formed by plane (003) of the primary grains 11 to the layer face direction. In Figures 2 and 3, the points shown in black within the oriented positive electrode layer 14 represent pores.

The oriented positive electrode layer 14 is an oriented sintered body composed of the plurality of primary grains 11 bound to each other. The primary grains 11 are each mainly in the form of a plate but may include rectangular, cubic, and spherical grains. The cross-sectional shape of each primary grain 11 is not particularly limited and may be a rectangular shape, a polygonal shape other than the rectangular shape, a circular shape, an elliptical shape, or a complex shape other than above.

The primary grains 11 are composed of a lithium complex oxide. The lithium complex oxide is an oxide represented by LiₓMO₂ (where 0.05 < x < 1.10 is satisfied, M represents at least one transition metal, and M typically contains one or more of Co, Ni, and Mn). The lithium complex oxide has a layered rock-salt structure. The layered rock-salt structure refers to a crystalline structure in which lithium layers and transition metal layers other than lithium are alternately stacked with oxygen layers interposed therebetween, that is, a crystalline structure in which transition metal ion layers and single lithium layers are alternately stacked with oxide ions therebetween (typically, an α-NaFeO₂ structure, i.e., a cubic rock-salt structure in which transition metal and lithium are regularly disposed in the [111] axis direction). Examples of the lithium complex oxide include LiₓCoO₂ (lithium cobaltate), LiₓNiO₂ (lithium nickelate), LiₓMnO₂ (lithium manganate), LiₓNiMnO₂ (lithium nickel manganate), LiₓNiCoO₂ (lithium nickel cobaltate), LiₓCoNiMnO₂ (lithium cobalt nickel manganate), and LiₓCoMnO₂ (lithium cobalt manganate), particularly preferably LiₓCoO₂ (lithium cobaltate, typically LiCoO₂). The lithium complex oxide may contain one or more elements selected from Mg, Al, Si, Ca, Ti, V, Cr, Fe, Cu, Zn, Ga, Ge, Sr, Y, Zr, Nb, Mo, Ag, Sn, Sb, Te, Ba, Bi, and W.

As shown in Figures 3 and 4, the average of the orientation angles of the primary grains 11, that is, the average orientation angle is over 0° and 30° or less. This brings various advantages as follows. First, since each primary grain 11 lies in a direction inclined from the thickness direction, the adhesion between the primary grains can be improved. As a result, the lithium ion conductivity between a certain primary grain 11 and each of other primary grains 11 adjacent to the primary grain 11 on both sides in the longitudinal direction can be improved, so that the rate characteristic can be improved. Secondly, the rate characteristic can be further improved. This is because, when lithium ions move in and out, the oriented positive electrode layer 14 expands and contracts smoothly since the oriented positive electrode layer 14 expands and contracts more in the thickness direction than in the layer face direction, as described above, and thus the lithium ions also move in and out smoothly. Thirdly, since the expansion and contraction of the oriented positive electrode layer 14 following the inflow and outflow of lithium ions are predominant in the direction perpendicular to the layer face, stress is less likely to occur at the bonding interface between the oriented positive electrode layer 14 and the ceramic separator 16, thereby making it easy to maintain good bonding at the interface.

The average orientation angle of the primary grains 11 is obtained by the following method. First, three horizontal lines that divide the oriented positive electrode layer 14 into four equal parts in the thickness direction and three vertical lines that divide the oriented positive electrode layer 14 into four equal parts in the layer face direction are drawn in an EBSD image of a rectangular region of 95 µm × 125 µm observed at a magnification of 1000 times, as shown in Figure 3. Next, the average orientation angle of the primary grains 11 is obtained by arithmetically averaging the orientation angles of all the primary grains 11 intersecting at least one of the three horizontal lines and the three vertical lines. The average orientation angle of the primary grains 11 is preferably 30° or less, more preferably 25° or less, from the viewpoint of further improving the rate characteristics. From the viewpoint of further improving the rate characteristics, the average orientation angle of the primary grains 11 is preferably 2° or more, more preferably 5° or more.

As shown in Figure 4, the orientation angles of the primary grains 11 may be widely distributed from 0° to 90°, but most of them are preferably distributed in the region of over 0° and 30° or less. That is, when a cross section of the oriented sintered body constituting the oriented positive electrode layer 14 is analyzed by EBSD, the total area of the primary grains 11 with an orientation angle of over 0° and 30° or less to the layer face of the oriented positive electrode layer 14 (which will be hereinafter referred to as low-angle primary grains) out of the primary grains 11 contained in the cross section analyzed is preferably 70% or more, more preferably 80% or more, with respect to the total area of the primary grains 11 contained in the cross section (specifically, 30 primary grains 11 used for calculating the average orientation angle). Thereby, the proportion of the primary grains 11 with high mutual adhesion can be increased, so that the rate characteristic can be further improved. Further, the total area of grains with an orientation angle of 20° or less among the low-angle primary grains is more preferably 50% or more with respect to the total area of 30 primary grains 11 used for calculating the average orientation angle. Further, the total area of grains with an orientation angle of 10° or less among the low-angle primary grains is more preferably 15% or more with respect to the total area of 30 primary grains 11 used for calculating the average orientation angle.

Since the primary grains 11 are each mainly in the form of a plate, the cross section of each primary grain 11 extends in a predetermined direction, typically in a substantially rectangular shape, as shown in Figures 2 and 3. That is, when the cross section of the oriented sintered body is analyzed by EBSD, the total area of the primary grains 11 with an aspect ratio of 4 or more in the primary grains 11 contained in the cross section analyzed is preferably 70% or more, more preferably 80% or more, with respect to the total area of the primary grains 11 contained in the cross section (specifically, 30 primary grains 11 used for calculating the average orientation angle). Specifically, in the EBSD image as shown in Figure 3, the mutual adhesion between the primary grains 11 can be further improved by above, as a result of which the rate characteristic can be further improved. The aspect ratio of each primary grain 11 is a value obtained by dividing the maximum Feret diameter of the primary grain 11 by the minimum Feret diameter. The maximum Feret diameter is the maximum distance between two parallel straight lines that interpose the primary grain 11 therebetween on the EBSD image in observation of the cross section. The minimum Feret diameter is the minimum distance between two parallel straight lines that interpose the primary grain 11 therebetween on the EBSD image.

The average diameter of the plurality of primary grains constituting the oriented sintered body is preferably 5 µm or more. Specifically, the average diameter of the 30 primary grains 11 used for calculating the average orientation angle is preferably 5 µm or more, more preferably 7 µm or more, further preferably 12 µm or more. Thereby, since the number of grain boundaries between the primary grains 11 in the direction in which lithium ions conduct is reduced, and the lithium ion conductivity as a whole is improved, the rate characteristic can be further improved. The average diameter of the primary grains 11 is a value obtained by arithmetically averaging the equivalent circle diameters of the primary grains 11. An equivalent circle diameter is the diameter of a circle having the same area as each primary grain 11 on the EBSD image.

The positive electrode layer 14 preferably includes pores. The electrolytic solution can penetrate into the sintered body by the sintered body including pores, particularly open pores, when the sintered body is integrated into a battery as a positive electrode plate. As a result, the lithium ion conductivity can be improved. This is because there are two types of conduction of lithium ions within the sintered body: conduction through constituent grains of the sintered body; and conduction through the electrolytic solution within the pores, and the conduction through the electrolytic solution within the pores is overwhelmingly faster.

The positive electrode layer 14, that is, the lithium complex oxide sintered body preferably has a porosity of 20 to 60%, more preferably 25 to 55%, further preferably 30 to 50%, particularly preferably 30 to 45%. The stress relief effect by the pores and the increase in capacity can be expected, and the mutual adhesion between the primary grains 11 can be further improved, so that the rate characteristics can be further improved. The porosity of the sintered body is calculated by polishing a cross section of the positive electrode layer with CP (cross-section polisher) polishing, thereafter observing the cross section at a magnification of 1000 times with SEM, and binarizing the SEM image obtained. The average equivalent circle diameter of pores formed inside the oriented sintered body is not particularly limited but is preferably 8 µm or less. The smaller the average equivalent circle diameter of the pores, the mutual adhesion between the primary grains 11 can be improved more. As a result, the rate characteristic can be improved more. The average equivalent circle diameter of the pores is a value obtained by arithmetically averaging the equivalent circle diameters of 10 pores on the EBSD image. An equivalent circle diameter is the diameter of a circle having the same area as each pore on the EBSD image. Each of the pores formed inside the oriented sintered body is preferably an open pore connected to the outside of the positive electrode layer 14.

The positive electrode layer 14, that is, the lithium complex oxide sintered body preferably has an average pore diameter of 0.1 to 10.0 µm, more preferably 0.2 to 5.0 µm, further preferably 0.25 to 3.0 µm. Within such a range, stress concentration is suppressed from occurring locally in large pores, and the stress is easily released uniformly in the sintered body.

The positive electrode layer 14 preferably has a thickness of 20 to 1000 µm, more preferably 30 to 900 µm, further preferably 40 to 800 µm. The thickness within such a range can improve the energy density of the lithium ion secondary battery 10 by increasing the capacity of the active material per unit area together with suppressing the deterioration of the battery characteristics (particularly, the increase of the resistance value) due to repeated charging/discharging.

The negative electrode layer 18 is composed of a titanium-containing sintered body. The titanium-containing sintered body preferably contains lithium titanate Li₄Ti₅O₁₂ (which will be hereinafter referred to as LTO) or niobium titanium complex oxide Nb₂TiO₇, more preferably LTO. LTO is typically known to have a spinel structure but can have other structures during charging and discharging. For example, the reaction of LTO proceeds in the two-phase coexistence of Li₄Ti₅O₁₂ (spinel structure) and Li₇Ti₅O₁₂ (rock salt structure) during charging and discharging. Accordingly, the structure of LTO is not limited to the spinel structure.

The fact that the negative electrode layer 18 is composed of a sintered body means that the negative electrode layer 18 contains no binder or conductive agent. This is because, even if a binder is contained in a green sheet, the binder disappears or burns out during firing. Since the negative electrode layer contains no binder, high capacity and good charge/discharge efficiency can be achieved by high packing density of the negative electrode active material (for example, LTO or Nb₂TiO₇). The LTO sintered body can be produced according to the method described in Patent Literature 3 (JP2015-185337A) and Patent Literature 4 (JP6392493B).

The negative electrode layer 18, that is, the titanium-containing sintered body has a structure in which a plurality (that is, a large number) of primary grains are bound. Accordingly, these primary grains are preferably composed of LTO or Nb₂TiO₇.

The thickness of the negative electrode layer 18 is preferably 20 to 1000 µm, more preferably 30 to 900 µm, further preferably 40 to 800 µm. As the negative electrode layer 18 is thicker, it is easier to achieve a battery with high capacity and high energy density. The thickness of the negative electrode layer 18 obtained by measuring the distance between the layer surfaces observed substantially in parallel, for example, when a cross section of the negative electrode layer 18 is observed with SEM (scanning electron microscope).

The primary grain size that is the average grain size of the plurality of primary grains forming the negative electrode layer 18 is preferably 1.2 µm or less, more preferably 0.02 to 1.2 µm, further preferably 0.05 to 0.7 µm. Within such a range, the lithium ion conductivity and the electron conductivity are easily compatible with each other, which contributes to improving the rate performance.

The negative electrode layer 18 preferably includes pores. The electrolytic solution can penetrate into the sintered body by the sintered body including pores, particularly open pores, when the sintered body is integrated into a battery as a negative electrode layer. As a result, the lithium ion conductivity can be improved. This is because there are two types of conduction of lithium ions within the sintered body: conduction through constituent grains of the sintered body; and conduction through the electrolytic solution within the pores, and the conduction through the electrolytic solution within the pores is overwhelmingly faster.

The negative electrode layer 18 preferably has a porosity of 20 to 60%, more preferably 30 to 55%, further preferably 35 to 50%. Within such a range, the lithium ion conductivity and the electron conductivity are easily compatible with each other, which contributes to improving the rate performance.

The negative electrode layer 18 has an average pore diameter of 0.08 to 5.0 µm, preferably 0.1 to 3.0 µm, more preferably 0.12 to 1.5 µm. Within such a range, the lithium ion conductivity and the electron conductivity are easily compatible with each other, which contributes to improving the rate performance.

The ceramic separator 16 is a microporous film made of ceramics. The ceramic separator 16 is advantageous in that it, of course, has excellent heat resistance and can be produced as one integrated sintered body together with the positive electrode layer 14, the negative electrode layer 18 and the current collecting layer 20 as a whole. The ceramic contained in the ceramic separator 16 is preferably at least one selected from MgO, Al₂O₃, ZrO₂, SiC, Si₃N₄, AIN, and cordierite, more preferably at least one selected from MgO, Al₂O₃, and ZrO₂. The ceramic separator 16 preferably has a thickness of 3 to 40 µm, more preferably 5 to 35 µm, further preferably 10 to 30 µm. The ceramic separator 16 preferably has a porosity of 30 to 85%, more preferably 40 to 80%.

The ceramic separator 16 may contain a glass component for improving the adhesion between the positive electrode layer 14 and the negative electrode layer 18. In this case, the content of the glass component in the ceramic separator 16 is preferably 0.1 to 50 wt%, more preferably 0.5 to 40 wt%, further preferably 0.5 to 30 wt%, with respect to the total weight of the ceramic separator 16. The glass component is preferably added to the ceramic separator 16 by adding a glass frit to the raw material powder of the ceramic separator. However, when the desired adhesion between the ceramic separator 16, the positive electrode layer 14, and the negative electrode layer 18 can be ensured, it is not particularly necessary for the ceramic separator 16 to contain the glass component.

The current collecting layer 20 is provided on each of both sides or the surface on the negative electrode layer 18 side of the unit cells 12. The current collecting layer 20 is not specifically limited, as long as it is a layer containing an electrically conductive material, but the current collecting layer 20 preferably contains at least one selected from the group consisting of Au, Pt, Pd, and Cu. The thickness of the current collecting layer 20 is preferably 0.05 to 10 µm, more preferably 0.1 to 5 µm, further preferably 0.1 to 3 µm. The current collecting layer 20 is essential on the negative electrode layer 18 side, but the current collecting layer 20 may be present or absent on the positive electrode layer 14 side. For example, in the case where the positive electrode layer 14 is an oriented positive electrode layer, since it has excellent electronic conductivity, the positive electrode layer 14 itself can have a current collecting function additionally without using the current collecting layer 20.

The electrolytic solution 22 is not specifically limited, and commercially available electrolytic solutions for lithium batteries such as a solution obtained by dissolving a lithium salt (e.g., LiPF₆) in a non-aqueous solvent such as an organic solvent (e.g., a mixed solvent of ethylene carbonate (EC) and methyl ethyl carbonate (MEC), a mixed solvent of ethylene carbonate (EC) and diethyl carbonate (DEC), or a mixed solvent of ethylene carbonate (EC) and ethyl methyl carbonate (EMC)) may be used.

In the case of forming a lithium ion secondary battery having excellent heat resistance, the electrolytic solution 22 preferably contains lithium borofluoride (LiBF₄) in a non-aqueous solvent. In this case, the non-aqueous solvent is preferably at least one selected from the group consisting of γ-butyrolactone (GBL), ethylene carbonate (EC) and propylene carbonate (PC), more preferably a mixed solvent composed of EC and GBL, a single solvent composed of PC, a mixed solvent composed of PC and GBL, or a single solvent composed of GBL, particularly preferably a mixed solvent composed of EC and GBL or a single solvent composed of GBL. The non-aqueous solvent has an increased boiling point by containing γ-butyrolactone (GBL), which considerably improves the heat resistance. From such a viewpoint, the volume ratio of EC:GBL in the EC and/or GBL containing non-aqueous solvent is preferably 0:1 to 1:1 (GBL ratio: 50 to 100% by volume), more preferably 0:1 to 1:1.5 (GBL ratio: 60 to 100% by volume), further preferably 0:1 to 1:2 (GBL ratio: 66.6 to 100% by volume), particularly preferably 0:1 to 1:3 (GBL ratio: 75 to 100% by volume). The lithium borofluoride (LiBF₄) to be dissolved in the non-aqueous solvent is an electrolyte having a high decomposition temperature, which also considerably improves the heat resistance. The LiBF₄ concentration in the electrolytic solution 22 is preferably 0.5 to 2 mol/L, more preferably 0.6 to 1.9 mol/L, further preferably 0.7 to 1.7 mol/L, particularly preferably 0.8 to 1.5 mol/L.

The electrolytic solution 22 may further contain vinylene carbonate (VC) and/or fluoroethylene carbonate (FEC) and/or vinyl ethylene carbonate (VEC) as additives. Both VC and FEC have excellent heat resistance. Accordingly, a SEI film having excellent heat resistance can be formed on the surface of the negative electrode layer 18 by the electrolytic solution 22 containing such additives.

Further, a solid electrolyte or a polymer electrolyte may be used instead of the electrolytic solution 22 (in other words, a solid electrolyte and a polymer electrolyte can be used as an electrolyte, other than the electrolytic solution 22). In such a case, at least the inside of the pores of the ceramic separator 16 is preferably impregnated with the electrolyte, as in the case of the electrolytic solution 22. The impregnation method is not specifically limited, but examples thereof include a method of melting the electrolyte and infiltrating it into the pores of the ceramic separator 16 and a method of pressing the green compact of the electrolyte against the ceramic separator 16.

According to a preferable aspect of the present invention, the lithium ion secondary battery 10 can have a plurality of the unit cells 12 and a plurality of the current collecting layers 20. Such a configuration of a cell laminate (multilayer cells) allows high voltage and high current to be achieved and the rate characteristic to be improved. In this aspect, a plurality of the unit cells 12 are stacked in series or parallel with the current collecting layers 20 interposed to form a cell laminate, which is accommodated in the exterior body 24. In this case, it is preferable that the parts of the cell laminate other than the electrolyte (that is, the positive electrode layer 14, the ceramic separator 16, the negative electrode layer 18, and the current collecting layers 20) form one integrated sintered body as a whole, not only for improving the yield and the long-term performance but also for improving the production efficiency (that is, a multilayer cell can be produced by firing once). In view of above, the number of the unit cells 12 contained in the cell laminate is preferably 1 to 20, more preferably 1 to 15, further preferably 1 to 10.

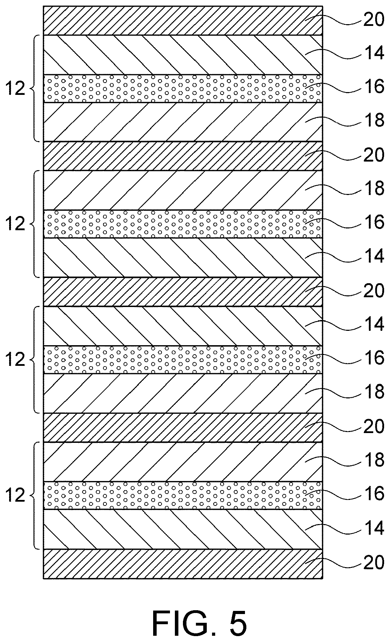

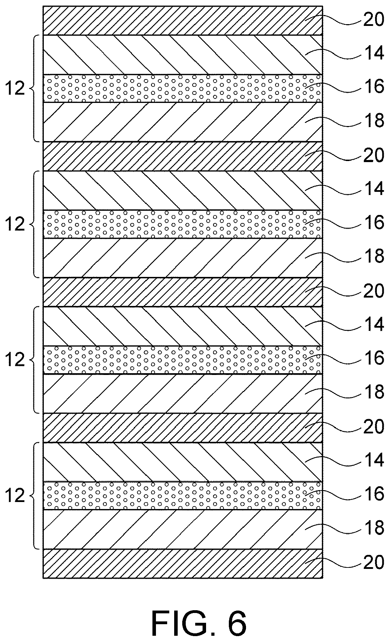

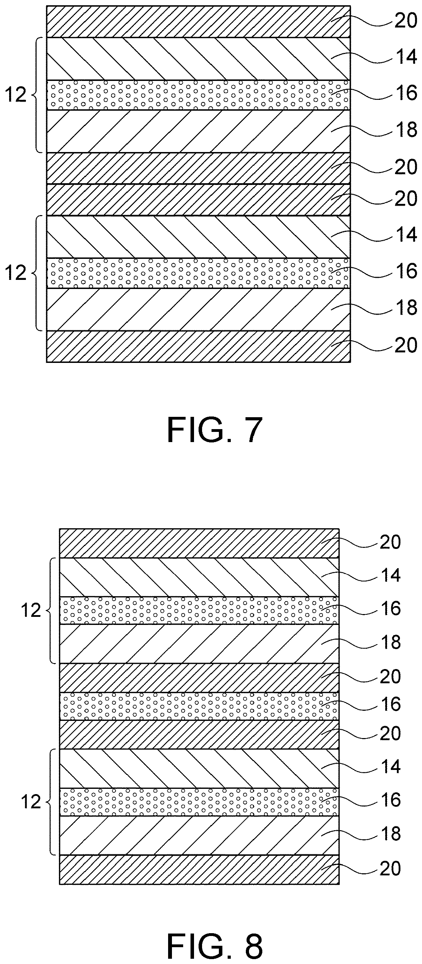

The layer structure of the cell laminate is not specifically limited, as long as it includes a plurality of the unit cells 12 (each including the positive electrode layer 14, the ceramic separator 16, the negative electrode layer 18, and the electrolyte) and a plurality of the current collecting layers 20. For example, as shown in Figure 5, a plurality of the unit cells 12 may be stacked in parallel with one piece of the current collecting layer 20 interposed therebetween, or as shown in Figure 6, a plurality of the unit cells 12 may be stacked in series with one piece of the current collecting layer 20 interposed therebetween. Further, as shown in Figure 7, a plurality of the unit cells 12 with the current collecting layer 20 formed on each of both sides thereof (that is, the current collecting layer 20/the unit cell 12/the current collecting layer 20) may be stacked, and in this case, two current collecting layers 20 are interposed between each two unit cells 12. Further, as shown in Figure 8, the ceramic separator 16 may be further interposed between the each adjacent current collecting layers 20. In any aspect, the current collecting layer 20 is desirably provided on each of both sides (on the upper and the bottom surface) of the cell laminate.

The cell laminate is not limited to the flat plate-stacked structure in the form of flat plates or layers stacked as shown in Figures 5 to 8 and may have various layer structures including the following examples. In any configuration mentioned as examples below, the cell laminate preferably forms one integrated sintered body as a whole.
- Folded structure: A sheet having a layer structure including unit cells and current collecting layers is folded once or multiple times to form a multilayer (large area) structure.
- Wound structure: A sheet having a layer structure including unit cells and current collecting layers is wound to be integrated, to form a multilayer (large area) structure.
- Multilayer ceramic capacitor (MLCC)-like structure: A lamination unit of current collecting layer/positive electrode layer/ceramic separator layer/negative electrode layer/current collecting layer is repeated in the thickness direction, to form a multilayer (large area) structure, in which a plurality of positive electrode layers are collected on one side (e.g., left side), and a plurality of negative electrode layers are collected on the other side (e.g., right side).

The exterior body 24 includes a closed space, and the closed space accommodates the positive electrode layer 14, the ceramic separator 16, the negative electrode layer 18, the current collecting layer 20, and the electrolytic solution 22. The exterior body 24 may be appropriately selected corresponding to the type of the lithium ion secondary battery 10. For example, in the case where the lithium ion secondary battery is in a form of coin-shaped battery as shown in Figure 1, the exterior body 24 typically includes the positive electrode can 24a, the negative electrode can 24b, and the gasket 24c, and the positive electrode can 24a and the negative electrode can 24b are crimped via the gasket 24c to form the closed space. The positive electrode can 24a and the negative electrode can 24b can be made of metals such as stainless steel and are not specifically limited. The gasket 24c can be an annular member made of an insulating resin such as polypropylene, polytetrafluoroethylene, and PFA resin and is not particularly limited.

Further, in the case where the lithium ion secondary battery is in a form of chip battery that can be incorporated in a card, it is preferable that the exterior body is a resin substrate, and the battery elements (that is, the positive electrode layer 14, the negative electrode layer 18, the ceramic separator 16, and the electrolytic solution 22) are embedded in the resin substrate. For example, the battery elements may be sandwiched by a pair of resin films, and it is preferable that the resin films are bonded together by an adhesive, or the resin films are thermally fused together by hot pressing.

### Method for producing integrated sintered plate

The integrated sintered body composed of the positive electrode layer 14, the ceramic separator 16, the negative electrode layer 18, and the current collecting layer 20 may be produced by any method but is preferably produced by (1) producing green sheets corresponding respectively to the positive electrode layer 14, the ceramic separator 16, and the negative electrode layer 18, (2) forming the current collecting layer 20 on one side of the positive electrode green sheet and/or the negative electrode green sheet, (3) stacking these green sheets so that the current collecting layer 20 is on the outside, to form unit laminates (corresponding to the unit cells 12), and (4) calcining the green sheet laminate obtained. Further, cell laminates can be produced by repeating steps (1) to (3) above.

### (1) Preparation of various green sheets

### (1a) Preparation of positive electrode green sheet

A lithium complex oxide-containing green sheet as a positive electrode green sheet can be prepared, as follows. A raw material powder composed of lithium complex oxide is prepared. The powder preferably comprises pre-synthesized platy particles (e.g., LiCoO₂ platy particles) having a composition of LiMOz (M as described above). The volume-based D50 particle diameter of the raw material powder is preferably 0.3 to 30 µm. For example, the LiCoO₂ platy particles can be produced as follows. Co₃O₄ powder and Li₂CO₃ powder as raw materials are mixed and fired (500 to 900 °C, 1 to 20 hours) to synthesize LiCoO₂ powder. The resultant LiCoO₂ powder is milled into a volume-based D50 particle diameter of 0.2 µm to 10 µm with a pot mill to yield platy LiCoO₂ particles capable of conducting lithium ions along the faces of the plate. Such LiCoO₂ particles are also produced by a procedure involving grain growth in a green sheet from LiCoO₂ powder slurry and crushing the green sheet, or a procedure involving synthesis of platy crystals, such as a flux process, a hydrothermal synthesis process, a single crystal growth process using a melt, and a sol gel process. The resultant LiCoO₂ particles are readily cleaved along cleavage planes. The LiCoO₂ particles may be cleaved by crushing to produce LiCoO₂ platy particles.

The platy particles may be independently used as raw material powder, or a mixed powder of the platy powder and another raw material powder (for example, Co₃O₄ particles) may be used as a raw material powder. In the latter case, it is preferred that the platy powder serves as template particles for providing orientation, and another raw material powder (e.g., Co₃O₄ particles) serves as matrix particles that can grow along the template particle. In this case, the raw material powder is preferably composed of a mixed powder in a ratio of template particles to matrix particles of 100:0 to 3:97. When the Co₃O₄ raw material powder is used as the matrix particles, the volume-based D50 particle diameter of the Co₃O₄ raw material powder may be any value, for example, 0.1 to 1.0 µm, and is preferably smaller than the volume-based D50 particle diameter of LiCoOz template particles. The matrix particles may also be produced by heating a Co(OH)₂ raw material at 500 °C to 800 °C for 1 to 10 hours. In addition to Co₃O₄, Co(OH)₂ particles may be used, or LiCoOz particles may be used as the matrix particles.

When the raw material powder is composed of 100% of LiCoOz template particles, or when LiCoO₂ particles are used as matrix particles, a large (e.g., 90 mm × 90 mm square) flat LiCoO₂ sintered layer can be yielded by firing. Although the mechanism is not clear, since synthesis of LiCoO₂ does not proceed in a firing process, a change in volume or local unevenness of the shape probably does not occur.

The raw material powder is mixed with a dispersion medium and any additive (e.g., binder, plasticizer, and dispersant) to form a slurry. A lithium compound (e.g., lithium carbonate) in an excess amount of about 0.5 to 30 mol% other than LiMOz may be added to the slurry to promote grain growth and compensate for a volatile component in a firing process described later. The slurry preferably contains no pore-forming agent. The slurry is defoamed by stirring under reduced pressure, and the viscosity is preferably adjusted into 4000 to 10000 cP. The resultant slurry is formed into a sheet to give a green sheet containing lithium complex oxide. The sheet is preferably formed by a forming procedure capable of applying a shear force to platy particles (for example, template particles) in the raw material powder. Through this process, the primary grains can have an average tilt angle of over 0° and 30° or less to the sheet face. The forming procedure capable of applying a shear force to platy particles suitably includes a doctor blade process. The thickness of the green sheet containing the lithium complex oxide may be appropriately selected so as to give the above desired thickness after firing.

### (1b) Preparation of negative electrode green sheet

A titanium-containing green sheet as a negative electrode green sheet may be produced by any method. For example, a LTO-containing green sheet can be prepared, as follows. First, raw material powder (LTO powder) composed of lithium titanate Li₄Ti₅O₁₂ is prepared. Commercially available or newly synthesized LTO powder may be used as the raw material powder. For example, powder obtained by hydrolyzing a mixture of titanium tetraisopropoxy alcohol and isopropoxy lithium may be used, or a mixture containing lithium carbonate, titania, or the like may be fired. The raw material powder preferably has a volume-based D50 particle size of 0.05 to 5.0 µm, more preferably 0.1 to 2.0 µm. A larger particle size of the raw material powder tends to increase the size of the pores. Further, in the case where the particle size of the raw material is large, milling (such as pot milling, bead milling, and jet milling) may be performed to a desired particle size. The raw material powder is mixed with a dispersion medium and any additive (e.g., binder, plasticizer, and dispersant) to form a slurry. A lithium compound (e.g., lithium carbonate) in an excess amount of about 0.5 to 30 mol% other than LiMO₂ may be added to the slurry to promote grain growth and compensate for a volatile component in a firing process described later. The slurry preferably contains no pore-forming agent. The slurry is defoamed by stirring under reduced pressure, and the viscosity is preferably adjusted into 4000 to 10000 cP. The resultant slurry is formed into a LTO-containing green sheet. The sheet can be formed by any known process and is preferably formed by a doctor blade process. The thickness of the LTO-containing green sheet may be appropriately selected so as to give the above desired thickness after firing.

### (1c) Preparation of separator green sheet

A separator green sheet can be prepared, as follows. First, at least one ceramic powder selected from MgO, Al₂O₃, ZrO₂, SiC, Si₃N₄, AIN, and cordierite is prepared. Glass frit may be added to the ceramic powder. The raw material powder preferably has a volume-based D50 particle size of 0.05 to 20 µm, more preferably 0.1 to 10 µm. A larger particle size of the raw material powder tends to increase the size of the pores. Further, in the case where the particle size of the raw material is large, milling (such as pot milling, bead milling, and jet milling) may be performed to a desired particle size. The raw material powder is mixed with a dispersion medium and any additive (e.g., binder, plasticizer, and dispersant) to form a slurry. The slurry preferably contains no pore-forming agent. The slurry is defoamed by stirring under reduced pressure, and the viscosity is preferably adjusted into 4000 to 10000 cP. The resultant slurry is formed into a separator green sheet. The sheet can be formed by any known process and is preferably formed by a doctor blade process. The thickness of the separator green sheet may be appropriately selected so as to give the above desired thickness after firing.

### (2) Formation of current collecting layer

The current collecting layer is not specifically limited, as long as it is a layer containing an electrically conductive material but preferably forms a metal layer by firing. The current collecting layer may be formed by applying a metal paste (e.g., Au paste, Pt paste, Pd paste, or Cu paste) to one side of the positive electrode green sheet and/or the negative electrode green sheet. The metal paste may be applied by any method but preferably applied by printing since a current collecting layer having a thickness controlled with high accuracy can be formed with high productivity. The current collecting layer may be formed after forming a green sheet laminate onto one or both sides of the green sheet laminate.

### (3) Lamination and pressure bonding of green sheet

Then, the positive electrode green sheet, the separator green sheet, and the negative electrode green sheet are sequentially stacked, and the laminate obtained is pressed so that the green sheets are pressure-bonded together. The pressing may be performed by a known method and is not specifically limited but is preferably performed by CIP (cold isostatic pressing). The pressing pressure is preferably 10 to 5000 kgf/cm², more preferably 50 to 3000 kgf/cm². The green sheet laminate thus pressure-bonded is preferably punched into a desired shape (such as a coin shape and a chip shape) or size using a punching die. Thereby, the displacement between the positive electrode layer 14 and the negative electrode layer 18 can be eliminated in the integrated sintered body in the final form. As a result, the end face of the positive electrode layer 14 and the end face of the negative electrode layer 18 are aligned, so that the battery capacity can be maximized.

### (4) Firing of green sheet laminate

The green sheet laminate (including current collecting layers) obtained is placed on a setter. The setter is made of ceramics, preferably zirconia or magnesia. The setter is preferably embossed. The green sheet disposed on the setter is put into a sheath. The sheath is made of ceramics, preferably alumina. Then, the green sheet in this state is degreased, as needed, and fired to obtain an integrated sintered body. The degreasing is preferably performed at 300 to 600°C for 0.5 to 20 hours. Further, the firing is preferably performed at 650 to 900°C for 0.01 to 20 hours, more preferably at 700 to 850°C for 0.5 to 10 hours. The heating rate during firing is preferably 50 to 1500°C/h, more preferably 200 to 1300°C/h. In particular, this heating rate is preferably employed in a temperature rising process from 600 to 900°C, more preferably from 600 to 800°C. Thus, an integrated sintered body composed of the positive electrode layer 14, the ceramic separator 16, the negative electrode layer 18, and the current collecting layer 20 is obtained. In the case where the punching process is not performed at the stage of the green sheet laminate, a displacement between the positive electrode layer 14 and the negative electrode layer 18 can occur in the integrated sintered body in the final form. In this case, the end face of the integrated sintered body is preferably finished by a technique such as laser processing, cutting, and polishing, to minimize or eliminate the displacement. As a result, the end face of the positive electrode layer 14 and the end face of the negative electrode layer 18 are aligned, so that the battery capacity can be maximized.

### EXAMPLES

The invention will be illustrated in more detail by the following examples. In the following examples, LiCoO₂ will be abbreviated as "LCO", and Li₄Ti₅O₁₂ will be abbreviated as "LTO".

### Example 1

### (1) Preparation of LCO green sheet (positive electrode green sheet)

First, Co₃O₄ powder (manufactured by SEIDO CHEMICAL INDUSTRY CO., LTD.) and Li₂CO₃ powder (manufactured by THE HONJO CHEMICAL CORPORATION) weighed to a molar ratio Li/Co of 1.01 were mixed, and thereafter the mixture was kept at 780°C for 5 hours. The resultant powder was milled into a volume-based D50 of 0.4 µm with a pot mill to yield powder composed of LCO platy particles. The resultant LCO powder (100 parts by weight), a dispersion medium (toluene:isopropanol = 1:1) (100 parts by weight), a binder (polyvinyl butyral: Product No. BM-2, manufactured by SEKISUI CHEMICAL CO., LTD.) (12 parts by weight), a plasticizer (di-2-ethylhexyl phthalate (DOP), manufactured by Kurogane Kasei Co., Ltd.) (4 parts by weight), and a dispersant (product name: RHEODOL SP-O30, manufactured by Kao Corporation) (2 parts by weight) were mixed. The resultant mixture was defoamed by stirring under reduced pressure to prepare a LCO slurry with a viscosity of 4000 cP. The viscosity was measured with an LVT viscometer manufactured by Brookfield. The slurry prepared was formed into a LCO green sheet onto a PET film by a doctor blade process. The thickness of the LCO green sheet was adjusted to 120 µm after firing.

### (2) Preparation of LTO green sheet (negative electrode green sheet)

First, LTO powder (volume-based D50 particle size: 0.06 µm, manufactured by Sigma-Aldrich Japan) (100 parts by weight), a dispersion medium (toluene:isopropanol = 1:1) (100 parts by weight), a binder (polyvinyl butyral: Product No. BM-2, manufactured by SEKISUI CHEMICAL CO., LTD.) (20 parts by weight), a plasticizer (di-2-ethylhexyl phthalate (DOP), manufactured by Kurogane Kasei Co., Ltd.) (4 parts by weight), and a dispersant (product name: RHEODOL SP-O30, manufactured by Kao Corporation) (2 parts by weight) were mixed. The resultant negative electrode raw material mixture was defoamed by stirring under reduced pressure to prepare a LTO slurry with a viscosity of 4000 cP. The viscosity was measured with an LVT viscometer manufactured by Brookfield. The slurry prepared was formed into a LTO green sheet onto a PET film by a doctor blade process. The thickness of the LTO green sheet was adjusted to 140 µm after firing.

### (3) Preparation of MgO green sheet (separator green sheet)

Magnesium carbonate powder (manufactured by Konoshima Chemical Co., Ltd.) was heated at 900°C for 5 hours to obtain MgO powder. The resultant MgO powder and glass frit (CK0199, manufactured by Nippon Frit Co., Ltd. (currently, TAKARA STANDARD CO., LTD.)) were mixed at a weight ratio of 4:1. The resultant mixed powder (volume-based D50 particle size: 0.4 µm) (100 parts by weight), a dispersion medium (toluene:isopropanol = 1:1) (100 parts by weight), a binder (polyvinyl butyral: Product No. BM-2, manufactured by SEKISUI CHEMICAL CO., LTD.) (20 parts by weight), a plasticizer (di-2-ethylhexyl phthalate (DOP), manufactured by Kurogane Kasei Co., Ltd.) (4 parts by weight), and a dispersant (product name: RHEODOL SP-O30, manufactured by Kao Corporation) (2 parts by weight) were mixed. The resultant raw material mixture was defoamed by stirring under reduced pressure to prepare a slurry with a viscosity of 4000 cP. The viscosity was measured with an LVT viscometer manufactured by Brookfield. The slurry prepared was formed into a separator green sheet onto a PET film by a doctor blade process. The thickness of the separator green sheet was adjusted to 15 µm after firing.

### (4) Formation of current collecting layer

On each side of the LCO green sheet (positive electrode green sheet) and the LTO green sheet (negative electrode green sheet), an Au paste (product name: GB-2706, available from Tanaka Kikinzoku Kogyo K.K.) was printed with a printer. The thickness of the printed layer was set to 0.5 µm after firing.

### (5) Lamination, pressure bonding, and firing

The LCO green sheet (positive electrode green sheet), the MgO green sheet (separator green sheet), and the LTO green sheet (negative electrode green sheet) were sequentially stacked so that each current collecting layer was on the outside, and the laminate obtained was pressed at 200 kgf/cm² by CIP (cold isostatic pressing) to pressure-bond the green sheets together. The resultant laminate in a form of circular plate was degreased at 600°C for 5 hours, then heated to 800°C at 1000°C/h, and kept for 10 minutes to fire, followed by cooling. Thus, one integrated sintered body composed of the positive electrode layer (LCO sintered body layer), the ceramic separator (MgO separator), the negative electrode layer (LTO sintered body layer), and each current collecting layer (Au layer) was obtained.

### (6) Production of lithium ion secondary battery

The coin-shaped lithium ion secondary battery 10 as schematically shown in Figure 1 was produced as follows. The positive electrode current collecting layer, the integrated sintered plate (the LCO positive electrode layer, the MgO separator, and the LTO negative electrode layer), and the negative electrode current collecting layer were accommodated between the positive electrode can and the negative electrode can, which would form a battery case, so as to be stacked in this order from the positive electrode can toward the negative electrode can, and an electrolytic solution was filled therein. Thereafter, the positive electrode can and the negative electrode can were crimped via a gasket to be sealed. Thus, the coin cell-shaped lithium ion secondary battery 10 with a diameter of 20 mm and a thickness of 3.2 mm was produced. At this time, the electrolytic solution was a solution of LiBF₄ (1.5 mol/L) in a mixed organic solvent of ethylene carbonate (EC) and γ-butyrolactone (GBL) at 1:3 (volume ratio).

### (6) Evaluation

The LCO sintered layer (positive electrode layer), the LTO sintered layer (negative electrode layer), and the MgO separator (ceramic separator) synthesized in Procedure (5) above and the coin-shaped lithium ion secondary battery manufactured in Procedure (6) were evaluated for various properties as shown below.

### <Average orientation angle of primary grains>

The LCO sintered layer was polished with a cross-section polisher (CP) (IB-15000CP, manufactured by JEOL Ltd.), and the resultant cross section of the positive electrode layer (cross section perpendicular to the layer face of the positive electrode layer) was subjected to the EBSD measurement at a 1000-fold field of view (125 µm × 125 µm) to give an EBSD image. This EBSD measurement was performed using a Schottky field emission scanning electron microscope (model JSM-7800F, manufactured by JEOL Ltd.). For all grains identified in the resultant EBSD image, the angles defined by the (003) planes of the primary grains and the layer face of the positive electrode layer (that is, the tilt of the crystal orientation from the (003) planes) is determined as a tilt angle. The average value of the angles was determined as an average orientation angle of the primary grains. As a result, the average orientation angle of the primary grains in the positive electrode layer was 16°.

### <Layer thickness>

The LCO and LTO sintered layers and the MgO separator were polished with a cross-section polisher (CP) (IB-15000CP, manufactured by JEOL Ltd.), and the resultant cross sections were observed with SEM (JSM6390LA, manufactured by JEOL Ltd.) to determine the thickness of the positive electrode layer, the negative electrode layer, and the separator. As a result, the thickness of the positive electrode layer was 60 µm, the thickness of the negative electrode layer was 70 µm, and the thickness of the ceramic separator was 15 µm.

### <Porosity>

The LCO or LTO sintered layer and the MgO separator were polished with a cross-section polisher (CP) (IB-15000CP, manufactured by JEOL Ltd.), and the resultant cross section of the positive electrode layer or the negative electrode layer was observed with SEM (JSM6390LA, manufactured by JEOL Ltd.) at a 1000-fold field of view (125 µm × 125 µm). The SEM image was subjected to an image analysis, the area of all pores was divided by the area of the positive electrode or the negative electrode, and the resultant value was multiplied by 100 to calculate the porosity (%). As a result, the porosity of the positive electrode layer was 45%, the porosity of the negative electrode layer was 45%, and the porosity of the ceramic separator was 50%.

<Average pore diameter>

Using a mercury porosimeter (AutoPore IV9510, available from SHIMADZU CORPORATION), the average pore diameter of the LCO or LTO sintered body layer was measured by mercury porosimetry. As a result, the average pore diameter of the positive electrode layer was 0.8 µm, the average pore diameter of the negative electrode layer was 0.5 µm, and the average pore diameter of the ceramic separator was 0.2 µm.

### <Proportion of direct contact region at interface between current collecting layer/negative electrode layer>

The integrated sintered body was polished with a cross-section polisher (CP) (IB-15000CP, available from JEOL Ltd.), to form a polished cross section (cross section perpendicular to the plate face of the electrode plate) including the current collecting layer and the negative electrode layer. The polished cross section was subjected to observation by SEM (JSM-IT500LA, available from JEOL Ltd.) at a 1000-fold field of view (125 µm × 125 µm) and the EDX measurement. The regions of the current collecting layer (Au), the electrode layer (Ti), and voids were defined based on the SEM image and the EDX elemental mapping image obtained, to determine the length L₁ of the line segment of the current collecting layer (Au) constituting the interface (which will be hereinafter referred to as current collecting layer interfacial length L₁) and the total length L₂ of line segments at the interface where the current collecting layer (Au) and the negative electrode layer (Ti) were in direct contact (which will be hereinafter referred to as the direct contact length L₂). The direct contact length L₂ was the total length of the individual direct contact line segments (e.g., L₂₁ + L₂₂ + ... + L₂ₙ (n is an integer)) and equal to the value obtained by subtracting the total length L₃ of the line segments at the interface where the current collecting layer and voids are in contact from the current collecting layer interfacial length L₁. The direct contact length L₂ was divided by the current collecting layer interfacial length L₁ and multiplied by 100, to calculate the proportion of the direct contact region (= 100 × L₂/L₁). This measurement was performed at three points in the negative electrode layer, and the average of those values was employed as the proportion of the direct contact region at the interface between the current collecting layer and the negative electrode layer.

### <Yield evaluation>

The battery produced was subjected to appearance inspection and battery inspection, to evaluate the yield. 20 battery samples for each inspection were evaluated, and when 80% or more of the samples were evaluated as good products in both inspections, they were determined to be acceptable. The results were as shown in Table 1.

### (1) Appearance inspection

In each electrode structure, whether or not the electrode structures were integrated without delamination at the interface between the positive electrode layer and the ceramic separator, the interface between the negative electrode layer and the ceramic separator, the interface between the positive electrode layer and the current collecting layer, and the interface between the negative electrode layer and the current collecting layer was observed. Products with the electrode structures integrated without interfacial delamination were determined to be good products.

### (2) Battery inspection

The resistance value R30 at 1 Hz in SOC (state of charge) of 30% was measured by AC impedance measurement. R30 was multiplied by the current collecting layer area to calculate the resistance value (Ω·cm²). Batteries with a resistance value within 20% increase are determined as good products. As a reference battery, a battery (battery in which the current collecting layer does not constitute an integrated sintered body, and an aluminum foil as a current collecting layer is attached to the positive electrode layer and the negative electrode layer of the integrated sintered body (unit cell) using a conductive carbon paste) having the same current collecting structure as disclosed in the example of Patent Literature 5 (WO2019/221140A1) was used.

### <Evaluation of long-term performance>

The battery produced was charged at a constant voltage of 2.7 V and discharged at a discharge rate of 0.2 C to measure the initial discharge capacity. Thereafter, after the battery was charged at a constant voltage of 2.7 V, a cycle test was conducted at a discharge rate of 1 C 500 times, and then the battery was charged at a constant voltage of 2.7 V and then discharged at a discharge rate of 0.2 C, to measure the discharge capacity after cycle. The discharge capacity after cycle was divided by the initial discharge capacity and multiplied by 100, and those with the value over 70% were determined as good products. This evaluation was performed on 20 batteries, and when 80% or more of the batteries were determined as good products, the batteries were determined to be acceptable. The results were as shown in Table 1.

### Example 2

Batteries were produced and evaluated in the same manner as in Example 1, except that the steps of lamination, pressure bonding, and firing of (5) above were performed as follows, to form a cell laminate (stacked cell) including three unit cells. The results were as shown in Table 1.

### (5') Lamination, pressure bonding, and firing

The LCO green sheet (positive electrode green sheet), the MgO green sheet (separator green sheet), and the LTO green sheet (negative electrode green sheet) were sequentially stacked so that the current collecting layer was on the outside, to obtain a unit laminate. Three such unit laminates were produced. These laminates were stacked and pressed at 200 kgf/cm² by CIP (cold isostatic pressing) to pressure-bond the green sheets together. Thus pressure-bonded laminate was punched into a circular plate having a diameter of 10mm with a punching die. Firing in which the circular plate laminate obtained was degreased at 600°C for 5 hours, then heated to 800°C at 1000°C/h, and maintained for 10 minutes was performed, followed by cooling. Thus, one integrated sintered body composed of the positive electrode layer (LCO sintered body layer), the ceramic separator (MgO separator), the negative electrode layer (LTO sintered body layer), and each current collecting layer (Au layer) was obtained.

### Example 3

Batteries were produced and evaluated in the same manner as in Example 1, except that the steps of lamination, pressure bonding, and firing of (5) above were performed as follows, to form a wound cell. The results were as shown in Table 1.

### (5") Lamination, pressure bonding, and firing

The LCO green sheet (positive electrode green sheet), the MgO green sheet (separator green sheet), and the LTO green sheet (negative electrode green sheet) were sequentially stacked so that the current collecting layer was on the outside, to obtain a unit laminate. Three such unit laminates were produced. These laminates were stacked and pressed at 200 kgf/cm² by CIP (cold isostatic pressing) to pressure-bond the green sheets together. Thus pressure-bonded laminate was heated at 90°C with a hot plate and then wound to dimensions of an outer diameter of 10 mm and a thickness of 2.0 mm with a winding machine, to obtain a laminate. Firing in which this wound laminate was degreased at 600°C for 5 hours, then heated to 800°C at 1000°C/h, and maintained for 10 minutes was performed, followed by cooling. Thus, one integrated sintered body composed of the positive electrode layer (LCO sintered body layer), the ceramic separator (MgO separator), the negative electrode layer (LTO sintered body layer), and each current collecting layer (Au layer) was obtained.

### Example 4

Batteries were produced and evaluated in the same manner as in Example 1, except that the LTO green sheet (negative electrode green sheet) was produced in (2) above as follows, and the maximum temperature in firing of (5) above was 900°C. The results were as shown in Table 1.

### (2') Preparation of LTO green sheet (negative electrode green sheet)

First, LTO powder (volume-based D50 particle size: 0.06 µm, available from Sigma-Aldrich Japan) (hereinafter, referred to as "raw material powder") was provided. This raw material powder was partially heated at 900°C for 5 hours and then crushed with a pot mill to D50: 2.0 µm, to provide powder A. The powder A and raw material powder were weighed and mixed at a weight ratio of 50:50, to obtain LTO mixed powder. The LTO mixed powder (100 parts by weight), a dispersion medium (toluene:isopropanol = 1:1) (100 parts by weight), a binder (polyvinyl butyral: Product No. BM-2, manufactured by SEKISUI CHEMICAL CO., LTD.) (20 parts by weight), a plasticizer (DOP: Di(2-ethylhexyl)phthalate, manufactured by Kurogane Kasei Co., Ltd.) (4 parts by weight), and a dispersant (product name: RHEODOL SP-O30, manufactured by Kao Corporation) (2 parts by weight) were mixed. The resultant negative electrode raw material mixture was defoamed by stirring under reduced pressure to prepare a LTO slurry with a viscosity of 4000 cP. The viscosity was measured with an LVT viscometer manufactured by Brookfield. The slurry prepared was formed into a LTO green sheet onto a PET film by a doctor blade process. The thickness of the LTO green sheet was adjusted to a thickness after firing of 140 µm.

### Example 5

Batteries were produced and evaluated in the same manner as in Example 4, except that the mixing ratio (weight ratio) of the powder A and the raw material powder was changed to 80:20 in the preparation of the LTO green sheet (negative electrode green sheet) of (2') above, and the maximum temperature was changed to 800°C in the firing of (5) above. The results were as shown in Table 1.

### Example 6 (Comparison)

Batteries were produced and evaluated in the same manner as in Example 4, except that the mixing ratio (weight ratio) of the powder A and the raw material powder was changed to 90:10, and the amount of the binder (polyvinyl butyral) added was changed to 16 parts by weight, in the preparation of the LTO green sheet (negative electrode green sheet) of (2') above, and the maximum temperature was changed to 750°C in the firing of (5) above. The results were as shown in Table 1.

### Example 7 (Comparison)

Batteries were produced and evaluated in the same manner as in Example 4, except that the mixing ratio (weight ratio) of the powder A and the raw material powder was changed to 25:75, and the amount of the binder (polyvinyl butyral) added was changed to 16 parts by weight, in the preparation of the LTO green sheet (negative electrode green sheet) of (2') above, and the maximum temperature was changed to 1000°C in the firing of (5) above. The results were as shown in Table 1.

**[Table 1]**

| | Electrode form | Proportion of direct contact region at interface between current collecting layer and negative electrode layer (%) | Yield evaluation | Long-term performance evaluation |
|---|---|---|---|---|
| Example 1 | Single layer | 70 | Acceptable | Acceptable |
| Example 2 | Multilayer | 70 | Acceptable | Acceptable |
| Example 3 | Wound | 70 | Acceptable | Acceptable |
| Example 4 | Single layer | 90 | Acceptable | Acceptable |
| Example 5 | Single layer | 45 | Acceptable | Acceptable |
| Example 6* | Single layer | 30 | Unacceptable | Not evaluated (Note) |
| Example 7* | Single layer | 98 | Acceptable | Unacceptable |

| | | | | |
|---|---|---|---|---|
| Symbol * represents a comparative example. Note: Long-term performance evaluation was not performed due to unacceptable yield evaluation. | | | | |

## Claims

1. A lithium ion secondary battery comprising:
(a) a unit cell comprising:
a positive electrode layer composed of a lithium complex oxide sintered body,
a negative electrode layer composed of a titanium-containing sintered body,
a ceramic separator interposed between the positive electrode layer and the negative electrode layer, and
an electrolyte with which at least the ceramic separator is impregnated;
(b) a current collecting layer provided on each of both sides or a surface on a negative electrode layer side of the unit cell; and
(c) an exterior body comprising a closed space, the closed space accommodating the unit cell,
wherein the positive electrode layer, the ceramic separator, the negative electrode layer, and the current collecting layer form one integrated sintered body as a whole, whereby the positive electrode layer, the ceramic separator, the negative electrode layer, and the current collecting layer are bonded together, and
in cross-sectional observation of an interface between the current collecting layer and the negative electrode layer, a proportion of a region in which the current collecting layer and the negative electrode layer are in direct contact at the interface is 45 to 90%.

2. The lithium ion secondary battery according to claim 1, wherein the lithium complex oxide is lithium cobaltate.

3. The lithium ion secondary battery according to claim 1 or 2, wherein the positive electrode layer has a thickness of 20 to 1000 µm.

4. The lithium ion secondary battery according to any one of claims 1 to 3, wherein the negative electrode layer has a thickness of 20 to 1000 µm.

5. The lithium ion secondary battery according to any one of claims 1 to 4, wherein the titanium-containing sintered body comprises lithium titanate or niobium titanium complex oxide.

6. The lithium ion secondary battery according to any one of claims 1 to 5, wherein the ceramic separator has a thickness of 3 to 40 µm.

7. The lithium ion secondary battery according to any one of claims 1 to 6, wherein the ceramic separator comprises at least one selected from the group consisting of MgO, Al₂O₃, ZrO₂, SiC, Si₃N₄, AIN, and cordierite.

8. The lithium ion secondary battery according to any one of claims 1 to 7, wherein the lithium ion secondary battery has a plurality of the unit cells and a plurality of the current collecting layers, wherein the plurality of the unit cells are stacked in series or parallel with the current collecting layers interposed therebetween to form a cell laminate, and accommodated in the exterior body, and parts of the cell laminate other than the electrolyte form one integrated sintered body as a whole.

9. The lithium ion secondary battery according to claim 8, wherein the number of the unit cells included in the cell laminate is 1 to 10.
